# EUROPÄISCHE PATENTSCHRIFT

(11) **EP 0 922 517 B1**
(45) Veröffentlichungstag und Bekanntmachung des Hinweises auf die Patenterteilung: **29.08.2001**
(21) Anmeldenummer: 98121435.6
(22) Anmeldetag: 11.11.1998
(51) Int. Cl.: B23B 51/10

(54) **Kegelsenkeinrichtung**
Conical countersink
Outil à chanfreiner conique

(30) Priorität: 12.12.1997 DE 29721963 U
(43) Veröffentlichungstag der Anmeldung: 16.06.1999
(73) Patentinhaber: Dürr Präzisionswerkzeuge GmbH, 74613 Öhringen (DE)
(72) Erfinder: Marx, Wilhelm, 74613 Öhringen-Möglingen (DE); Müller, Wolfgang, 74626 Bretzfeld-Bitzfeld (DE)
(74) Vertreter: Clemens, Gerhard, Dr.-Ing.

(56) Entgegenhaltungen:
- US-A- 3 645 641

## Beschreibung

Die vorliegende Erfindung betrifft eine Kegelsenkeinrichtung zur Bearbeitung schwer zerspanbarer Metalle mit einem im wesentlichen kegelförmigen Kopfbereich und einem daran angeformten Schaftbereich, wobei beide Bereiche um eine Drehachse drehbar sind und der Kopfbereich mehrere Zahneinheiten mit Schneiden, Freiflächen und zwischen den Zahneinheiten angeordneten Spannuten aufweist.

Derartige Einrichtungen werden auch als Kegelsenker bezeichnet. Kegelsenkungen werden in vielen technischen Bereichen benötigt, in denen Senkschrauben oder Linsensenkschrauben eingesetzt werden. Die Senkbohrung gewährleistet, daß der Schraubenkopf nicht über das die Bohrung umgebende Material in eingeschraubtem Zustand übersteht. Derartige Kegelsenkeinrichtungen werden üblicherweise in ein Bohrfutter einer Werkzeugmaschine gespannt und in Rotation versetzt, wobei die Senkung durch spanabhebende Formgebung hergestellt wird.

Es sind Kegelsenkeinrichtungen der eingangs genannten Art in vielfältiger Ausbildung bekannt. Je nach Anforderung werden Kegelsenker mit unterschiedlichen Durchmessern und Längen eingesetzt.

Die bekannten Kegelsenker sind insbesondere bei der Bearbeitung von schwer zerspanbaren Metallen hinsichtlich ihrer Lebensdauer nicht optimal.

Der vorliegenden Erfindung liegt, ausgehend von dem genannten Stand der Technik, das technische Problem bzw. die Aufgabe zugrunde, eine Kegelsenkeinrichtung der eingangs genannten Art anzugeben, die eine erhöhte Lebensdauer gewährleistet, einfach und wirtschaftlich hergestellt werden kann.

Die erfindungsgemäße Kegelsenkeinrichtung ist durch die Merkmale des unabhängigen Anspruchs 1 gegeben. Vorteilhafte Ausgestaltungen und Weiterbildungen sind Gegenstand der abhängigen Ansprüche.

Demgemäß zeichnet sich die erfindungsgemäße Kegelsenkeinrichtung dadurch aus, daß die Schneide jeweils so ausgebildet ist, daß sie im vorderen Kopfbereich der Einrichtung, d.h. im Bereich kleiner Durchmesser, einen negativen Spanwinkel aufweist und im hinteren Kopfbereich der Einrichtung, d.h. im Bereich großer Durchmesser einen positiven Spanwinkel aufweist. Dabei kommt bevorzugt eine Einrichtung zum Einsatz, bei der der Spanwinkelverlauf entlang einer Schneide linear veränderlich vom negativen zum positiven Winkel hin verläuft.

Eine besonderes bevorzugte Ausgestaltung der erfindungsgemäßen Kegelsenkeinrichtung zeichnet sich dadurch aus, daß der negative Spanwinkel im vorderen Kopfbereich im Bereich zwischen 0° bis 15°, insbesondere 0° bis 5°, und der positive Spanwinkel im hinteren Kopfbereich zwischen 0° bis 25°, insbesondere 8° bis 15°, liegt.

Mit der erfindungsgemäßen Kegelsenkeinrichtung, die insbesondere bei zähen festen Werkstoffen zum Einsatz kommt, wird gerade bei diesen Werkstoffen eine längere Lebensdauer als bei den bekannten Kegelsenkeinrichtungen ermöglicht. Die dargestellte geometrische Ausbildung der Schneidenform gewährleistet durch den genannten Vorteil einen besonders wirtschaftlichen Einsatz.

Gemäß einer besonders vorteilhaften Ausgestaltung ist die Zahnteilung umfangsmäßig ungleichmäßig ausgebildet, wobei der Änderungswinkel zweier aufeinanderfolgender Umfangsteilungswinkel der Zahneinheiten kleiner ist als 10°, insbesondere kleiner als 4° .

Besonders gute Ergebnisse, insbesondere bei schwer zerspanbaren Metallen, lassen sich durch eine Ausführungsform erzielen, die sich dadurch auszeichnet, daß fünf Zahneinheiten vorhanden sind, die mit folgenden Umfangsteilungswinkeln angeordnet sind: ca. 70°, 74°, 70°, 72°, 74°.

Als Material für die Schneiden kann - je nach Einsatzgebiet - Hartmetallmaterial oder Hochleistungsschnellarbeitsstahl (HSS-E) eingesetzt werden. Dabei werden Hartmetallqualitäten im Bereich von K10 bis P30 in Abhängigkeit des zu bearbeitenden Werkstoffes verwendet, wobei beispielsweise die Qualität K10 für den Werkstoff Aluminium eingesetzt wird.

Obwohl HSS-E-Stähle eine geringere Verschleißfestigkeit als Hartmetall aufweist, bringt dieses Material aufgrund der beschriebenen Schneidgeometrie sehr gute Ergebnisse und wird daher z. B. bei Titan wirtschaftlich eingesetzt.

Die Erfindung sowie eine vorteilhafte Ausführungsform und Weiterbildung derselben wird im folgenden anhand des in der Zeichnung dargestellten Beispiels näher beschrieben und erläutert. Es zeigen:
- Fig.1: schematische Seitenansicht einer Kegelsenkeinrichtung mit einem kegelförmigen Kopfbereich mit einem veränderlichen Spanwinkelverlauf entlang einer jeden Schneide,
- Fig. 2: schematische Stirnansicht der Kegelsenkeinrichtung gemäß Fig. 1 entgegen der Bohrrichtung,
- Fig. 3: schematische Detailschnittdarstellung des vorderen Kopfbereiches der Kegelsenkeinrichtung gemäß Fig. 1 entlang der Schnittführung C-D in Richtung der Spannut gesehen und
- Fig. 4: schematische Detailschnittdarstellung des hinteren Kopfbereichs der Kegelsenkeinrichtung gemäß Fig. 1 entlang der Schnittführung A-B in Richtung der Spannut gesehen.

Eine Kegelsenkeinrichtung 10 besitzt einen zylindrischen Schaft 14, an den über eine Halseinheit 18 ein kegelförmiger Kopfbereich 12 angeformt ist. Die Halseinheit 18 besitzt einen um wenige Millimeter größeren Durchmesser als der Schaftbereich 14. Die genannten Bauteile sind um eine gemeinsame Drehachse 16 drehbar.

Der Kopfbereich 12 weist insgesamt fünf umfangsmäßig verteilt vorhandene Zahneinheiten 20 auf, wobei zwischen den Zahneinheiten 20 jeweils eine Spannut 26 vorhanden ist. Die Zahneinheiten besitzen jeweils eine entlang der Kegelkontur verlaufende Schneide 22, wobei sich an jede Schneide 22 eine erste Freifläche 24.1 und eine zweite Freifläche 24.2 mit jeweils unterschiedlichem Neigungswinkel 52 bzw. 54 anschließen.

Der Flankenwinkel 50 zwischen der Schneide 22 und der Drehachse 16 beträgt im dargestellten Ausführungsbeispiel 45°. Er kann in der Praxis in einem Bereich zwischen 15° bis 90° vorhanden sein.

Die Schneiden 22 verjüngen sich nicht bis zu einer gemeinsamen Spitze sondern bis zu einem vorgebbaren Spiegeldurchmesser 32.

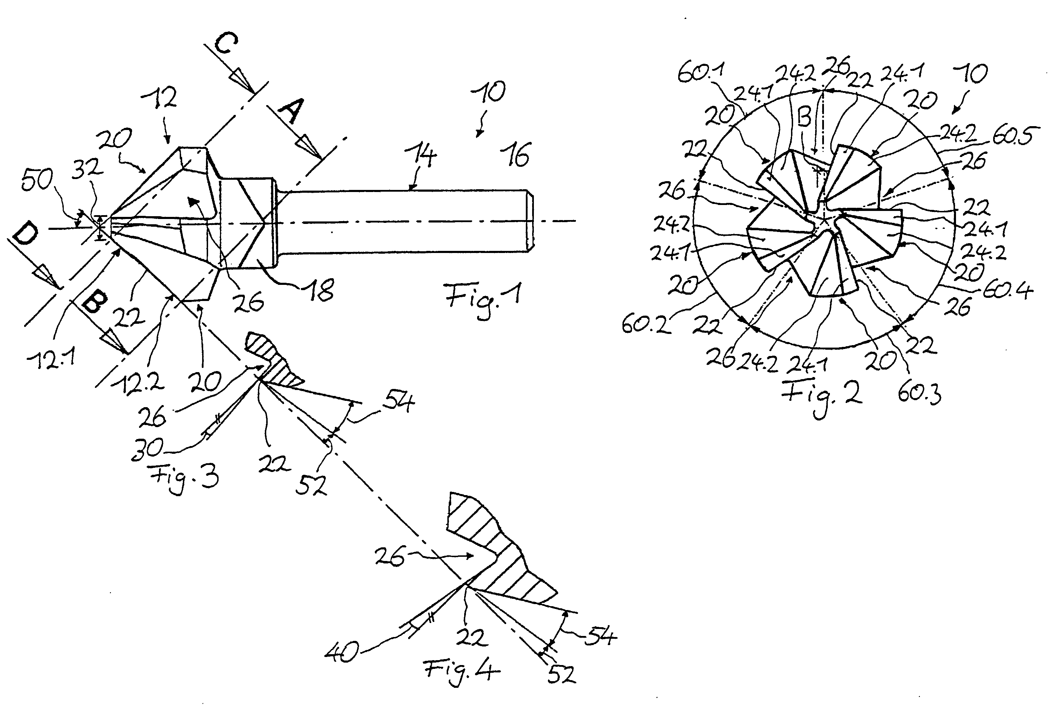

Der Verlauf jeder Schneide 22 ist nun wie folgt gewählt: in einem vorderen Kopfbereich 12.1 ist ein sogenannter negativer Spanwinkel 30 vorhanden, der sich in einem linearen Verlauf entlang der Schneide 22 bis zu einem hinteren Kopfbereich 12.2 in einen positiven Spanwinkel 40 wandelt. Die Änderung des Spanwinkels ist in den Fig. 3 und 4 jeweils in einem Schnitt in Sicht der Spannut 26 dargestellt. Der bevorzugte Bereich des negativen Spanwinkels 30 kann mit 0° bis 15° angegeben werden. Der bevorzugte Bereich des positiven Spanwinkels 40 kann im Bereich von 8° bis 25° angegeben werden.

Gemäß Fig. 2 sind die Zahneinheiten 20 mit einem ungleichmäßigen Umfangsteilungswinkel 60 vorhanden, wobei in dem dargestellten Ausführungsbeispiel gemäß Fig. 2 die fünf vorhandenen Umfangsteilungswinkel 60.1, 60.2, 60.3, 60.4, 60.5 die Werte 70°, 72°, 70°, 72°, 74° in der genannten Reihenfolge annehmen.

In Fig. 2 ist zusätzlich das Maß B als sogenanntes "Maß vor Mitte" eingetragen, um welchen Wert die Spitze der Schneide 22 im vorderen Kopfbereich 12.1 von der Mitte abweicht. In diesem Bereich gilt für den negativen Spanwinkel 30 die mathematische Beziehung, daß der Quotient aus dem Maß B und der Hälfte des Spiegeldurchmessers 32 dem Sinus des Spanwinkels 30 entspricht.

Die dargestellte Ausführungsform zeigt lediglich ein Beispiel der erfindungsgemäßen Kegelsenkeinrichtung. Insbesondere können Einrichtungen mit anderen Abmessungen zum Einsatz kommen. Die erfindungsgemäße Kegelsenkeinrichtung ist besonders geeignet zur Bearbeitung schwer zerspanbarer Metalle.

## Patentansprüche

1. Kegelsenkeinrichtung (10) zur Bearbeitung schwer zerspanbarer Metalle mit einem im wesentlichen kegelförmigen Kopfbereich (12) und einem an den Kopfbereich (12) angeformten Schaftbereich (14), wobei beide Bereiche (12; 14) um eine Drehachse (16) drehbar sind und der Kopfbereich (12) mehrere Zahneinheiten (20) mit Schneiden (22), Freiflächen (24.1, 24.2) und zwischen den Zahneinheiten (20) angeordnete Spannute (26) aufweist,
**dadurch gekennzeichnet**, daß
die Schneide (22) jeweils so ausgebildet ist, daß sie im vorderen Kopfbereich (12.1) der Einrichtung (10), d.h. im Bereich kleiner Durchmesser, einen negativen Spanwinkel (30) aufweist und im hinteren Kopfbereich (12.2) der Einrichtung (10), d.h. im Bereich großer Durchmesser, einen positiven Spanwinkel (40) aufweist.

2. Einrichtung nach Anspurch 1,
**dadurch gekennzeichnet,** daß
der Spanwinkelverlauf entlang einer Schneide (22) linear veränderlich ausgebildet ist.

3. Einrichtung nach Anspruch 1 und/oder 2,
**dadurch gekennzeichnet,** daß
der negative Spanwinkel (30) im vorderen Kopfbereich (12.1) im Bereich zwischen 0° bis 15° (Altgrad), insbesondere 0° bis 5°, und der positive Spanwinkel (40) im hinteren Kopfbereich (12.2) zwischen 0° und 25° (Altgrad), insbesondere 8° bis 15°, liegt.

4. Einrichtung nach einem oder mehreren der vorstehenden Ansprüche,
**dadurch gekennzeichnet,** daß
die Zahnteilung des Kopfbereiches (12) umfangsmäßig ungleich ausgebildet ist.

5. Einrichtung nach Anspruch 4,
**dadurch gekennzeichnet,** daß
die Winkeländerung zweier aufeinanderfolgender Umfangsteilungswinkel (60.1, ...60.5) der Zahneinheiten (20) kleiner als 10° (Altgrad), insbesondere kleiner als 4°, ausgebildet ist.

6. Einrichtung nach Anspruch 5,
**dadurch gekennzeichnet,** daß
fünf Zahneinheiten (20) vorhanden sind mit folgenden aufeinanderfolgenden Umfangsteilungswinkeln: ca. 70°, 74°, 70°, 72°, 74° (Altgrad).

7. Einrichtung nach einem oder mehreren der vorstehenden Ansprüche,
**dadurch gekennzeichnet,** daß
das Maß (B) vor Mitte des Beginns der Schneide (22) im vorderen Kopfbereich (12.1) liegt.

8. Einrichtung nach einem oder mehreren der vorstehenden Ansprüche,
**dadurch gekennzeichnet,** daß
das Material für die Schneide als Hartmetallmaterial ausgebildet ist.

9. Einrichtung nach Anspruch 8,
**dadurch gekennzeichnet,** daß
die Schneide als gelötete Platteneinheit ausgebildet ist.

10. Einrichtung nach einem oder mehreren der Ansprüche 1 bis 7,
**dadurch gekennzeichnet**, daß
das Schneidenmaterial als Hochleistungsschnellarbeitsstahl (HSS-E) ausgebildet ist.

11. Einrichtung nach einem oder mehreren der vorstehenden Ansprüche,
**dadurch gekennzeichnet,** daß
der Kopfbereich hartstoffbeschichtet ausgebildet ist.

## Claims

1. Countersinking device (10) for machining difficult-to-machine metals, having an essentially conical head region (12) and a shank region (14) integrally formed on the head region (12), both regions (12; 14) being rotatable about a rotational axis (16), and the head region (12) having a plurality of tooth units (20) with cutting edges (22), flanks (24.1, 24.2), and flutes (26) arranged between the tooth units (20), characterized in that the cutting edge (22) is in each case designed in such a way that it has a negative rake angle (30) in the front head region (12.1) of the device (10), i.e. in the region of small diameters, and a positive rake angle (40) in the rear head region (12.2) of the device (10), i.e. in the region of large diameters.

2. Device according to Claim 1, characterized in that the rake-angle profile along a cutting edge (22) is formed so as to be linearly variable.

3. Device according to Claim 1 and/or 2, characterized in that the negative rake angle (30) in the front head region (12.1) is within the range of 0° to 15° (degrees), in particular 0° to 5°, and the positive rake angle (40) in the rear head region (12.2) is between 0° and 25° (degrees), in particular 8° to 15°.

4. Device according to one or more of the preceding claims, characterized in that the circumferential tooth pitch of the head region (12) is designed to be nonuniform.

5. Device according to Claim 4, characterized in that the angular change between two successive circumferential pitch angles (60.1, ...60.5) of the tooth units (20) is less than 10° (degrees), in particular less than 4°.

6. Device according to Claim 5, characterized in that there are five tooth units (20) with the following successive circumferential pitch angles: approx. 70°, 74°, 70°, 72°, 74° (degrees).

7. Device according to one or more of the preceding claims, characterized in that the dimension (B) in front of centre of the beginning of the cutting edge (22) is in the front head region (12.1).

8. Device according to one or more of the preceding claims, characterized in that the material for the cutting edge is formed as carbide material.

9. Device according to Claim 8, characterized in that the cutting edge is designed as a brazed tip unit.

10. Device according to one or more of Claims 1 to 7, characterized in that the cutting material is formed as super high speed steel (HSS-E).

11. Device according to one or more of the preceding claims, characterized in that the head region is formed so as to be coated with hard material.

## Revendications

1. Dispositif conique (10) à chanfreiner pour l'usinage de métaux dont l'enlèvement de copeaux est malaisé, comprenant une région frontale (12) sensiblement conique et une région de fût (14) faisant corps avec ladite région frontale (12), les deux régions (12 ; 14) pouvant tourner autour d'un axe de rotation (16), et la région frontale (12) présentant plusieurs unités dentées (20) munies de tranchants (22), de surfaces contre-dépouillées (24.1, 24.2) et de rainures (26) d'enlèvement de copeaux, situées entre les unités dentées (20),
caractérisé par le fait que le tranchant (22) est respectivement réalisé de façon telle qu'il comporte un angle négatif (30) d'enlèvement de copeaux dans la région frontale antérieure (12.1) du dispositif (10), c'est-à-dire dans la région de petit diamètre, et un angle positif (40) d'enlèvement de copeaux dans la région frontale postérieure (12.2) dudit dispositif (10), c'est-à-dire dans la région de grand diamètre.

2. Dispositif selon la revendication 1,
caractérisé par le fait que l'allure de l'angle d'enlèvement de copeaux est réalisée avec variation linéaire le long d'un tranchant (22).

3. Dispositif selon la revendication 1 et/ou 2,
caractérisé par le fait que l'angle négatif (30) d'enlèvement de copeaux se situe, dans la région frontale antérieure (12.1), dans la plage comprise entre 0° et 15° (degrés), notamment entre 0° et 5° ; et l'angle positif (40) d'enlèvement de copeaux est compris entre 0° et 25° (degrés), notamment entre 8° et 15° dans la région frontale postérieure (12.2).

4. Dispositif selon l'une ou plusieurs des revendications précédentes,
caractérisé par le fait que le pas de la denture de la région frontale (12) est de réalisation inégale sur le pourtour.

5. Dispositif selon la revendication 4,
caractérisé par le fait que la variation angulaire de deux pas angulaires périphériques successifs (60.1, ... 60.5) des unités dentées (20) est réalisée inférieure à 10° (degrés), notamment inférieure à 4°.

6. Dispositif selon la revendication 5,
caractérisé par la présence de cinq unités dentées (20) dont les pas angulaires périphériques successifs présentent les valeurs suivantes : environ 70°, 74°, 70°, 72°, 74° (degrés).

7. Dispositif selon l'une ou plusieurs des revendications précédentes,
caractérisé par le fait que la cote (B), précédant le centre du début du tranchant (22), se situe dans la région frontale antérieure (12.1).

8. Dispositif selon l'une ou plusieurs des revendications précédentes,
caractérisé par le fait que le matériau destiné au tranchant se présente comme un matériau du type métal dur.

9. Dispositif selon la revendication 8,
caractérisé par le fait que le tranchant est réalisé sous la forme d'un ensemble unitaire de plaques brasées.

10. Dispositif selon l'une ou plusieurs des revendications 1 à 7,
caractérisé par le fait que le matériau des tranchants se présente comme de l'acier d'usinage rapide à fort rendement (HSS-E).

11. Dispositif selon l'une ou plusieurs des revendications précédentes,
caractérisé par le fait que la région frontale est réalisée revêtue d'un matériau dur.
